# FASCICULE DE BREVET EUROPEEN

(11) **EP 2 042 390 B1**
(45) Date de publication et mention de la délivrance du brevet: **13.10.2010**
(21) Numéro de dépôt: 08164864.4
(22) Date de dépôt: 23.09.2008
(51) Int. Cl.: B60R 21/34, B60Q 1/04

(54) **Projecteur de véhicule automobile avec sécurité piéton**
Fahrzeugscheinwerfer mit Fußgängerschutz
Vehicle headlamp with pedestrian protection

(30) Priorité: 27.09.2007 FR 0706790
(43) Date de publication de la demande: 01.04.2009
(73) Titulaire: VALEO VISION, 93012 Bobigny (FR)
(72) Inventeur: Bakacha, Malik, 44370 Belligne (FR)

(56) Documents cités:
- EP-A- 1 122 126
- EP-A- 1 400 408
- EP-A- 1 577 160
- DE-A1- 10 143 676

## Description

L'invention concerne un projecteur de véhicule automobile intégrant des éléments réactifs permettant de diminuer la force d'impact du piéton contre les éléments internes du projecteur, lors d'un choc piéton. L'invention concerne également un procédé de protection des piétons mis en oeuvre par ce projecteur.

L'invention trouve des applications dans le domaine de l'automobile. Elle trouve, en particulier, des applications dans le domaine de la protection des piétons, en cas de choc d'un piéton contre un véhicule automobile, répondant à la norme européenne relative à la sécurité des piétons.

Il existe dans le domaine de l'automobile, une norme européenne visant à protéger les piétons en cas de choc d'un piéton contre un véhicule. Cette norme vise notamment le choc d'un piéton contre un projecteur du véhicule. En effet, lors d'un choc entre un piéton et un véhicule automobile, appelé par la suite choc piéton, certains éléments internes du projecteur sont particulièrement dangereux pour le piéton, pouvant être à l'origine de lésions irréversibles. L'un de ces éléments internes particulièrement dangereux est le module d'éclairage du projecteur.

EP 1 400 408 A décrit un projecteur de ce genre selon le préambule de la revendication 1.

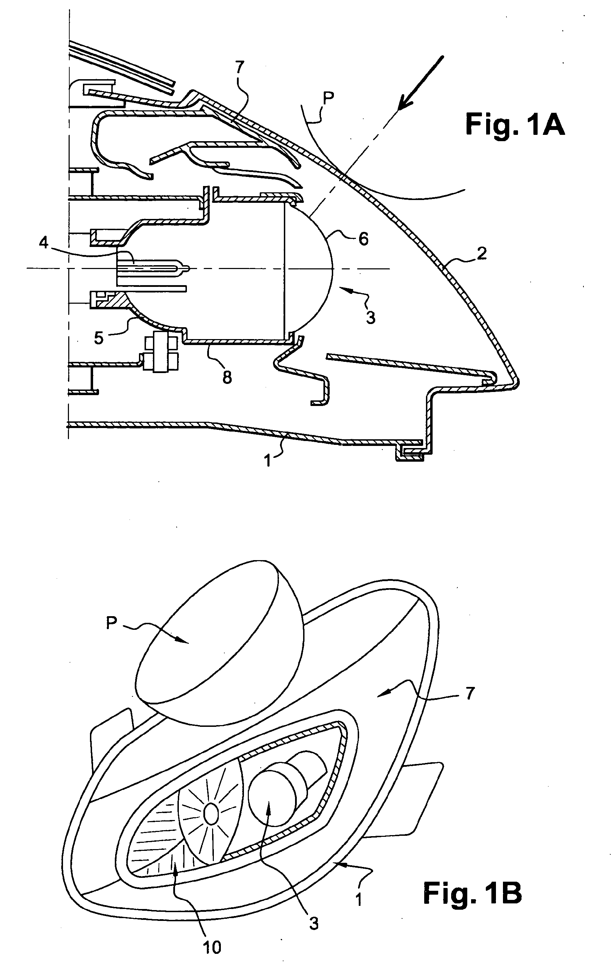

Sur les figures 1A et 1B, on a représenté des exemples de projecteurs classiques. La figure 1A représente une vue en coupe d'un projecteur classique. Ce projecteur de véhicule comporte un boîtier 1 fermé par une glace de protection 2. Le projecteur comporte, à l'intérieur du boîtier 1, un module d'éclairage 3, par exemple un module elliptique, comprenant notamment une source lumineuse 4 émettant un faisceau lumineux, un réflecteur 5 apte à réfléchir le faisceau lumineux émis par la source lumineuse 4 vers la glace de protection 2 et une lentille 6 apte à diffuser le faisceau lumineux réfléchi. Pour améliorer la réflexion lumineuse à l'intérieur du projecteur, un masque 7 peut recouvrir au moins partiellement la surface intérieure du boîtier 1 et de la glace de protection 2. Ce masque 7 peut être, par exemple, réalisé dans une matière métallique réfléchissante.

La plupart des projecteurs actuels proposent plusieurs fonctions d'éclairage, notamment :
- la fonction veilleuse utilisée pour signaler la présence du véhicule lorsqu'il fait encore jour mais que la luminosité diminue,
- la fonction de croisement utilisée pour ne pas éblouir le conducteur d'un véhicule venant en sens inverse,
- la fonction route utilisée pour éclairer au maximum la route lorsque le véhicule est seul sur une route,
- la fonction de correction pour modifier l'orientation verticale du faisceau lumineux afin de compenser l'assiette du véhicule lorsque celui-ci n'est pas parallèle à la route, et
- la fonction DBL (Dynamic Bending Light, en termes anglosaxons) qui permet d'éclairer la route, en ligne droite comme dans les virages, en suivant la trajectoire de la route. La fonction DBL est obtenue en modifiant latéralement l'orientation du faisceau lumineux produit par le module d'éclairage de sorte que la route soit éclairée de façon optimale lorsque le véhicule aborde un virage.

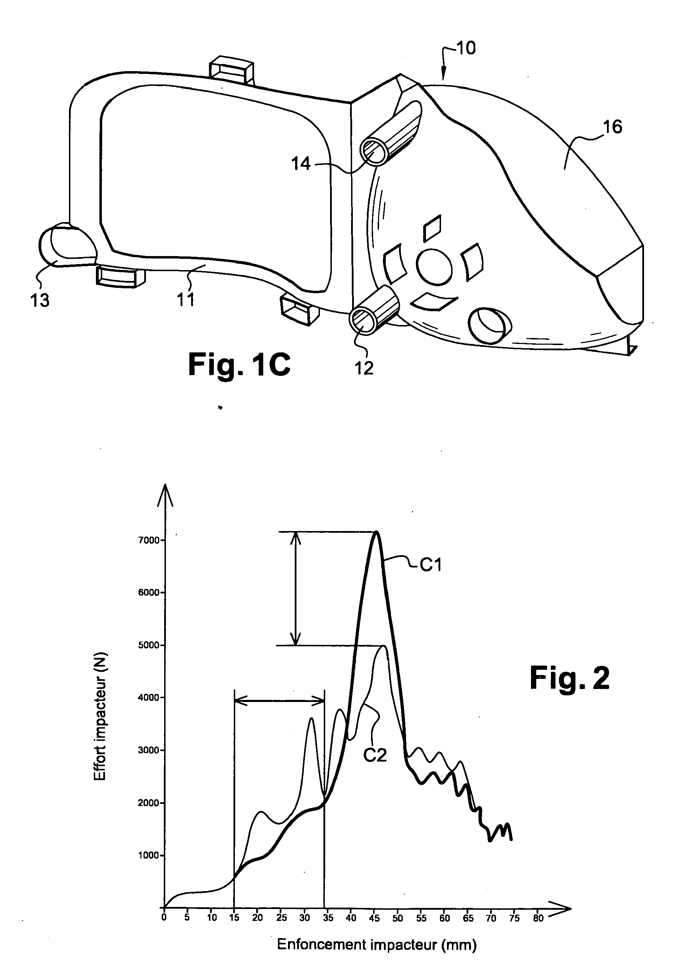

La figure 1B représente une vue en 3 dimensions d'un autre exemple de projecteur classique. Ce projecteur est équipé d'un système DBL. Dans un tel projecteur, le module d'éclairage 3 est fixé sur une platine réflecteur 10, appelée par la suite platine ou platine de support. Cette platine réflecteur 10 est une pièce intégrant une surface optique utilisée notamment pour la fonction route et une pièce de support pour fixer le module d'éclairage 3. Un exemple d'une telle platine est représenté sur la figure 1C.

Dans l'exemple de la figure 1B, un masque 7 recouvre la majorité de la surface intérieure du boîtier 1. Dans cet exemple, le masque 7 est installé autour du module d'éclairage 3. Ce masque 7 a, d'une part, un rôle esthétique dans la conception du projecteur et, d'autre part, un rôle de diffusion de la lumière.

Sur les figures 1A et 1B, on a représenté une tête de piéton P heurtant le projecteur du véhicule. Sur la figure 1A, la trajectoire d'impact entre le piéton et le projecteur est représentée en pointillée et la force d'impact est référencée F. Cette trajectoire montre que, en cas de choc d'un piéton contre un projecteur, le premier élément rencontré par le piéton est la glace de protection 2 puis le masque 7, et enfin le module d'éclairage 3.

Or, lors d'un choc piéton, tous les éléments que le piéton va heurter peuvent être responsables de lésions, plus ou moins graves, parfois irréversibles, pour le piéton. Pour limiter ces lésions, et ainsi protéger le piéton, les constructeurs automobiles cherchent à ce qu'à un maximum de l'énergie produite par le choc soit absorbée par la structure du projecteur, diminuant ainsi l'énergie absorbée par le piéton. Pour cela, il faut que les éléments heurtés par le piéton soient aptes à se déformer ou à se casser. En effet, en se déformant ou en se cassant, un élément absorbe une partie de l'énergie provenant du choc, ce qui réduit d'autant l'effet du choc sur le piéton. Par exemple, dans la plupart des projecteurs actuels, la glace de protection 2 est prévue pour se déformer ou se briser, en cas de choc, de façon à absorber une partie de l'énergie provenant de ce choc.

Lors d'un choc piéton, notamment dans le cas d'un choc en pleine face du projecteur, les différentes étapes du choc sont les suivantes :
- tout d'abord, la glace 2 du projecteur se déforme, puis après s'être déformée, la glace vient en appui sur les éléments internes du projecteur, à commencer par le masque 7 ;
- à son tour, le masque se déforme, appuyant alors sur la platine de support 10 du module d'éclairage 3 ;
- le piéton heurte alors le module d'éclairage 3.

Pour des raisons optiques, la lentille 6 du module d'éclairage 3 est généralement réalisée en verre. Elle est montée sur une pièce intermédiaire 8, elle-même fixée sur le réflecteur 5. Cet ensemble constitué de la lentille, du réflecteur et de la pièce intermédiaire, formant le module d'éclairage 3, est particulièrement rigide et peu déformable. Il constitue donc un point dur du projecteur, potentiellement très dangereux pour le piéton lors du choc. Ainsi, lorsque le piéton heurte le module d'éclairage, cela crée une montée d'effort très importante, particulièrement néfaste pour le piéton.

Sur la figure 2, on a représenté un exemple de courbe correspondant à l'effort d'impact, en fonction de l'enfoncement du projecteur, dans le cas du projecteur classique de la figure 1B. Cette courbe C1 montre que, avec un projecteur classique, l'effort de choc a une croissance relativement lente et régulière (c'est-à-dire sans pic) jusqu'à un enfoncement de l'ordre de 35mm correspondant à la déformation de la glace et des composants intérieurs. A partir de cet enfoncement de 35 mm, et jusqu'à environ 45 mm, il se crée un pic d'effort pouvant monter jusqu'à plus de 7000 Newtons. Ce pic d'effort correspond à l'impact du piéton sur le module d'éclairage. On comprend alors qu'une grande partie de l'effort de choc se concentre dans cet instant où le piéton heurte le module d'éclairage.

Pour améliorer la sécurité du piéton en cas de choc contre un véhicule, une norme européenne a été établie, qui définit les différents critères auquel un projecteur doit répondre pour être homologué. Cette norme considère plusieurs types de piétons (enfant ou adulte) et plusieurs zones d'impact du piéton (tête, hanches, jambes). Elle précise, pour chaque type de piéton et chaque zone d'impact, les limites en termes de lésion corporelle pour le piéton qui peuvent être absorbées par celui-ci. Pour vérifier la conformité à cette norme, des tests de choc sont effectués sur les projecteurs. Pour effectuer ces tests, on choisit un impacteur ayant une forme et un poids correspondant à la zone du corps du piéton considérée et on lance cet impacteur sur le projecteur avec la vitesse prévue dans la norme. Par exemple, la tête d'un enfant est assimilée à une sphère de 3,5 kg lancée à 35 km/h.

En d'autres termes, la norme européenne prévoit que le niveau de décélération ne dépasse pas une certaine limite, ce qui se traduit par un pic d'effort de la courbe C1 de la figure 2 qui diminue et passe en dessous d'une valeur prédéterminée, bien sûr inférieure à 7000 N.

Actuellement, plusieurs systèmes de protection ont déjà été mis en place par des constructeurs automobiles pour minimiser les conséquences du choc sur le piéton.

Il existe deux catégories de systèmes de protection :
- Les systèmes actifs sont des systèmes de sécurité qui se déclenchent juste avant le choc. Par exemple, les airbags, prétensionneurs ou capots actifs dans le cas d'un choc piéton. L'objectif de ces systèmes est d'améliorer l'absorption d'énergie par le déclenchement d'un dispositif supplémentaire qui a pour but de réduire progressivement la vitesse de l'occupant ou du piéton. Ces systèmes ont l'inconvénient d'être coûteux et nécessite un dispositif de détection très sûr/fiable.
- Les systèmes passifs sont des systèmes de sécurité qui visent à répartir différemment l'énergie lors d'un choc, en absorbant le maximum d'énergie supportable par la personne sur un minimum de course.

Les systèmes passifs ont pour inconvénient de nécessiter un volume suffisant de protection, ce qui se traduit dans le cas d'un choc piéton par une distance plus importante entre les points durs de la carrosserie et du projecteur et la surface du véhicule impactée.

Il existe aussi une catégorie intermédiaire, qui correspond aux systèmes réactifs, qui réagissent de façon mécanique lorsqu'ils sont impactés. Les appuie-tête qui s'approchent de la tête du passager lors d'un choc par l'arrière du véhicule afin de minimiser les lésions cervicales en sont un exemple. Ces systèmes sont un bon compromis entre les systèmes actifs et passifs.

L'invention a justement pour but de remédier aux inconvénients des techniques exposées précédemment.

A cette fin, l'invention propose un système réactif permettant de dériver l'énergie du choc afin de réduire le pic d'effort au moment de l'impact contre le module d'éclairage. Ce système réactif consiste en un projecteur dans lequel le module d'éclairage est déplacé avant que le piéton ne heurte le dit module. Le déplacement du module d'éclairage est obtenu en transférant une partie de l'énergie de choc reçue en surface du projecteur vers les éléments intérieurs du projecteur, notamment vers les fixations de la platine de support du module d'éclairage. Ce transfert de l'énergie de choc est réalisé au moyen d'une rehausse placée au-dessus de la platine de support du module d'éclairage. Cette rehausse est apte à transférer une partie de l'énergie du choc jusqu'au système de fixation du module d'éclairage.

De façon plus précise, l'invention concerne un projecteur pour véhicule automobile comportant :
- un boîtier fixé sur le véhicule et fermé par une glace de protection,
- un module d'éclairage monté dans le boîtier, apte à émettre un faisceau lumineux, et
- une platine apte à supporter le module d'éclairage, fixée au boîtier par des points de fixation situés dans une zone inférieure de ladite platine,
et qui comporte une réhausse placée au moins partiellement sur une face supérieure de la platine et apte à transférer au moins une partie d'un effort consécutif à un choc d'un piéton contre la glace de protection, vers des (notamment tous les) points de fixation inférieurs de la platine, afin de déplacer le module d'éclairage. La fonction recherchée est d'obtenir le déplacement du module d'éclairage avant que le piéton n'atteigne ledit module d'éclairage.

L'invention comporte également une ou plusieurs des caractéristiques suivantes :
- la réhausse est installée dans un espace entre la platine et la glace de protection et/ou entre la platine et un masque recouvrant au moins partiellement une surface intérieure du boîtier et/ou de la glace de protection.
- la réhausse consiste en un ajout de matière intégré à la platine. (Cela présente notamment pour avantage le fait qu'on puisse fabriquer platine et réhausse en une seule étape de fabrication : on peut faire un moulage d'une seule pièce, mais aussi mouler la platine puis faire un surmoulage de la rehausse sur la platine, platine et réhausse pouvant alors être de la même matière polymère ou être en matières polymère différentes)
- la réhausse est une pièce fixée sur ou associée à la face supérieure de la platine, qui peut être par exemple en métal ou en matériau polymère. (Cela présente notamment l'avantage de pouvoir donner à cette pièce des formes très variées ou complexes, en forme de nid d'abeille par exemple, sans plus avoir à tenir compte de considérations de type capacité de démoulage rencontrées dans le cas où la platine est moulée/intégrée avec la platine, et de choisir des matériaux de caractéristiques mécanique différentes pour la platine et la réhausse)
- la réhausse est réalisée dans un matériau caissonné et/ou nervuré apte à se déformer ou se rompre.
- la réhausse comporte des bras de transfert reliant la face supérieure de la platine au voisinage des points de fixation inférieurs. (On peut ainsi transférer l'énergie directement et immédiatement du haut vers le bas du module).
- la réhausse comporte un bras transversal reliant les bras de transfert. (On améliore ainsi le transfert d'énergie obtenus par les deux bras de transfert, notamment pour que les deux pattes de fixation inférieures cassent plus vite/plus facilement).
- la réhausse est au moins partiellement métallique.

L'invention concerne également un procédé de protection d'un piéton tel que, lors d'un choc d'un piéton contre une glace de protection d'un projecteur de véhicule automobile, une réhausse, placée sur / associée à une face supérieure d'une platine de support d'un module d'éclairage du projecteur, transfère une partie de l'effort de choc de la glace de protection vers des points de fixation inférieurs de la platine, entraînant une rupture des dits points de fixation puis un déplacement du module d'éclairage. La fonction recherchée est que le module se déplace avant que le piéton ne heurte ledit module.

L'invention concerne en outre un véhicule comportant un projecteur tel que décrit précédemment.

L'invention sera mieux comprise à la lecture de la description qui suit et à l'examen des figures qui l'accompagnent, présentées à titre indicatif et non limitatif de l'invention.

La figure 1A, déjà décrite, représente une vue en coupe d'un projecteur de type elliptique classique.

La figure 1B, déjà décrite, représente une vue en 3 dimensions d'un projecteur classique dont le module d'éclairage est supporté par une platine.

La figure 1C, déjà décrite, représente un exemple de platine dans un projecteur classique.

La figure 2 représente deux courbes comparatives de l'effort de choc obtenu avec un projecteur classique et avec le projecteur de l'invention.

La figure 3 représente un premier mode de réalisation de la platine de support d'un projecteur selon l'invention.

Les figures 4A à 4D et les figures 5A à 5D représentent schématiquement l'intérieur d'un projecteur soumis à un choc piéton, respectivement, lorsque le projecteur est un projecteur classique et lorsque le projecteur et le projecteur de l'invention.

La figure 6 représente un second mode de réalisation de la platine du projecteur selon l'invention.

La figure 7 représente un troisième mode de réalisation de la platine du projecteur selon l'invention.

L'invention concerne un projecteur de véhicule automobile dans lequel, en cas de choc piéton, le module d'éclairage est déplacé avant que le piéton ne heurte ledit module afin de diminuer l'effort de choc au moment de l'impact contre le module d'éclairage.

Comme expliqué précédemment, un projecteur de véhicule comporte généralement un boîtier, fixé sur le véhicule, et fermé par une glace de protection. A l'intérieur du boîtier, une platine maintient le module d'éclairage. Elle permet d'orienter latéralement le module d'éclairage pour réaliser, notamment, la fonction DBL du projecteur. Cette platine est fixée sur le boîtier par différents points de fixation.

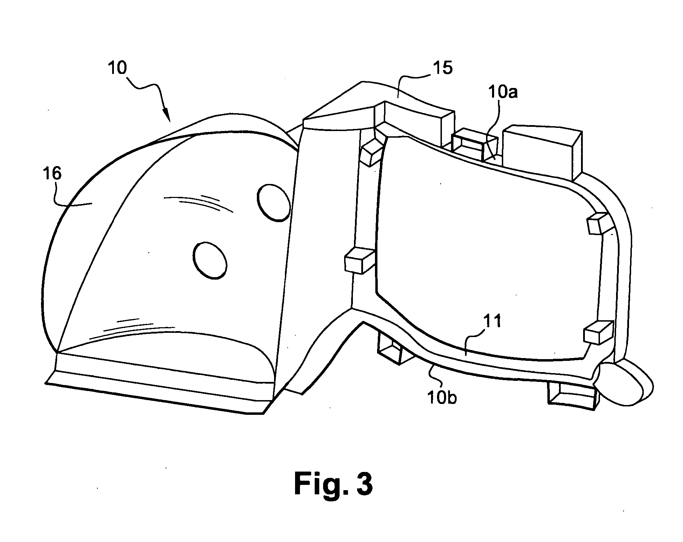

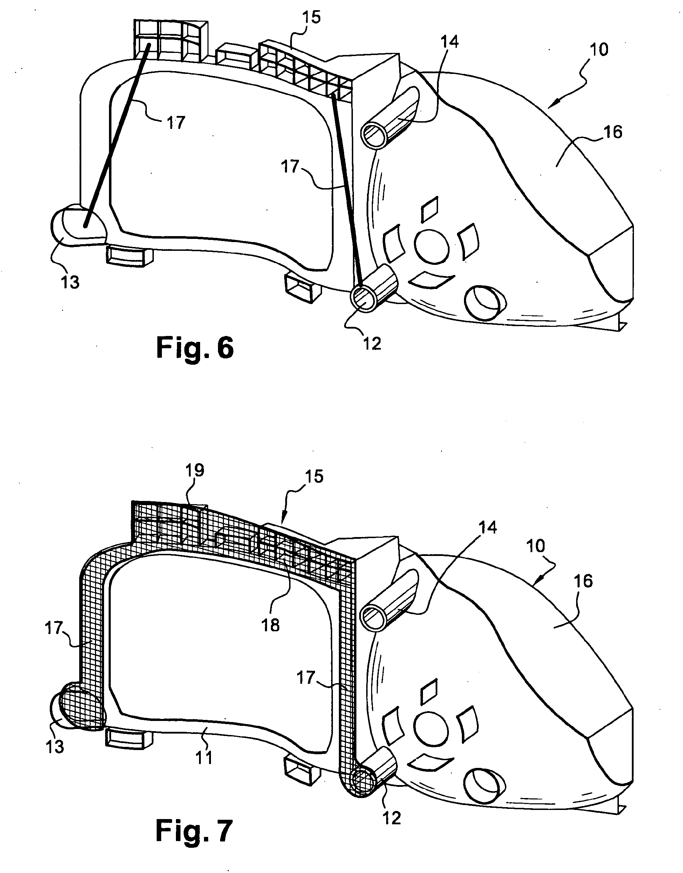

Un exemple d'une platine utilisée dans un projecteur de l'invention est représenté sur les figures 3 et 6. Cette platine 10 comporte une surface optique 16 et une pièce de support 11. La pièce de support 11 est adaptée pour maintenir le module d'éclairage, non représenté sur cette figure. La platine 10 comporte différents points de fixation par lesquels elle est maintenue sur le boîtier. Elle comporte, notamment, un point de fixation supérieur 14 et deux points de fixation inférieurs 12, 13, appelés aussi fûts de fixation.

Un fût est un cylindre creux à l'intérieur duquel est insérée une capsule sur laquelle est accroché un autre élément. Dans l'exemple de platine de la figure 3, le fût supérieur 14 reçoit une capsule de rotation sur laquelle peut être installé un système de correction. Le fût supérieur 14 constitue ainsi une accroche du système de correction.

Dans ce même exemple de la figure 3, un premier fût inférieur 12, situé dans la zone inférieure 10b de la platine, est un point fixe. Un second fût inférieur 13, également situé dans la zone inférieure de la platine, reçoit une capsule de rotation sur laquelle est monté un système de réglage latéral du module d'éclairage réalisant la fonction DBL. Les deux fûts inférieurs constituent des points de fixation de la platine sur le boîtier du projecteur.

Selon l'invention, la platine 10 comporte une rehausse 15. Cette rehausse 15 est une pièce installée au-dessus de la platine, c'est-à-dire sur la face supérieure de la platine 10. Cette réhausse 15 est placée entre la platine 10 et la glace de protection et/ou le masque. En effet, selon le projecteur considéré, ce peut être le masque ou la glace de protection qui est situé à la verticale au-dessus de la platine. Dans l'exemple de projecteur de la figure 1B, on voit que le masque est situé verticalement au-dessus de la platine, entre la glace de protection et ladite platine. Dans d'autres projecteurs, la platine peut être située verticalement sous la glace de protection, en particulier lorsque le projecteur ne comporte pas de masque. Dans la suite de la description, on considérera le cas où la réhausse est placée entre la masque et la platine, étant entendu que la technique est identique dans le cas où il n'y a pas de masque, la réhausse étant alors entre la glace de protection et la platine.

Comme expliqué par la suite, dans certains modes de réalisation de l'invention, la réhausse est destinée à remplir, au moins en partie, le volume vide situé entre la platine 10 et le masque. Ainsi, lorsque le piéton heurte le projecteur, sous l'effet des efforts de choc, la glace de protection se déforme entraînant une déformation du masque. En se déformant, le masque appuie sur la réhausse 15 de la platine 10. La rehausse 15 transmet alors, à la platine, les efforts de choc reçus par le masque. La platine transmet à son tour au moins une partie de ces efforts de choc à ses points de fixation inférieurs. Sous l'effet de ces efforts, les points de fixation 12 et 13 se cassent, entraînant un déplacement du module d'éclairage.

La rehausse 15 est une pièce d'adaptation qui remplit au moins partiellement l'espace vide entre la platine et le masque ou la glace de protection. Elle permet, d'une part, de réceptionner les efforts de choc avant que le piéton ne heurte la platine et, d'autre part, de transmettre ces efforts, ou une partie de ces efforts, à la zone inférieure de la platine. Les efforts ainsi transmis à la zone inférieure de la platine permettent de rompre les points de fixation 12 et 13 de la platine sur le boîtier. En cassant ces fixations, le module d'éclairage se déplace vers le bas, c'est-à-dire vers le fond du boîtier. Compte tenu du maintien du module d'éclairage dans la platine, lorsque les points de fixation se rompent, le module d'éclairage bascule. Selon l'invention, le module d'éclairage bascule avant que le piéton ne vienne heurter ledit module d'éclairage.

En d'autres termes, la réhausse de la platine permet de faire descendre le module d'éclairage vers le fond du boîtier, avant même que le piéton ne heurte le module. La vitesse d'impact du piéton sur le module d'éclairage se trouve ainsi réduite, la relation entre les efforts de choc et la vitesse d'impact du piéton étant quasiment linéaire.

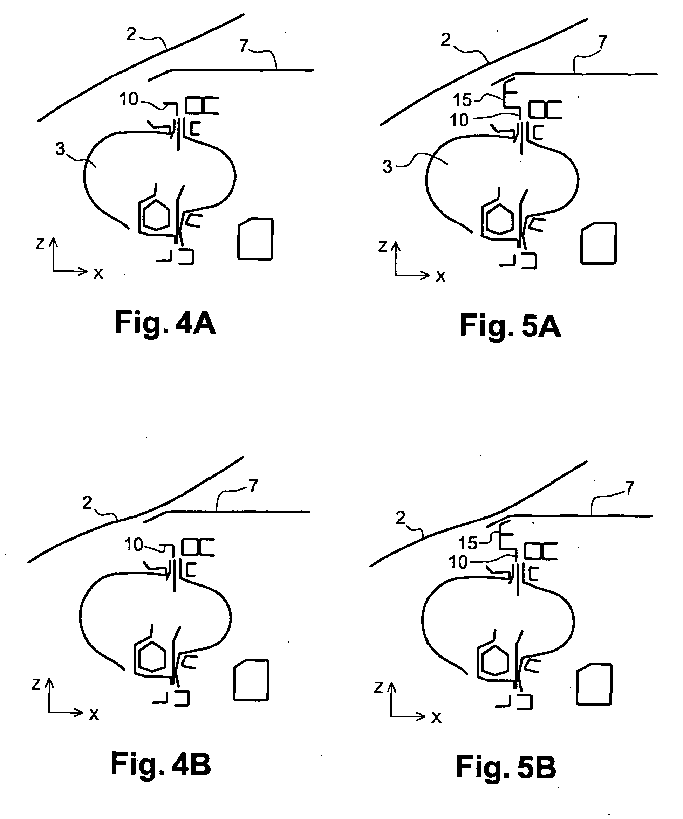

Sur les figures 4A à 4D et 5A à 5D, on a représenté schématiquement, à différents instants d'un choc piéton, l'état d'un projecteur, respectivement, pour un projecteur classique et pour un projecteur selon l'invention.

Les figures 4A et 5A montrent un projecteur avant le choc. La figure 4A représente un projecteur classique équipé d'un module d'éclairage 3 monté dans une platine simple 10. La figure 5A représente un projecteur selon l'invention équipé d'un module d'éclairage 3 monté dans une platine avec réhausse 15. On voit sur ces figures que, avant le choc, les modules d'éclairage sont installés de façon identique dans l'un ou l'autre des projecteurs. Sur la figure 5A, on voit que la platine avec réhausse est proche du masque 7, contrairement à la platine de la figure 4A qui est relativement éloignée du masque.

Sur les figures 4B et 5B, on a représenté les projecteurs pendant la phase de déformation de la glace de protection. A ce stade du choc, les deux projecteurs ont subi les mêmes déformations, à savoir la déformation de la glace de protection 2.

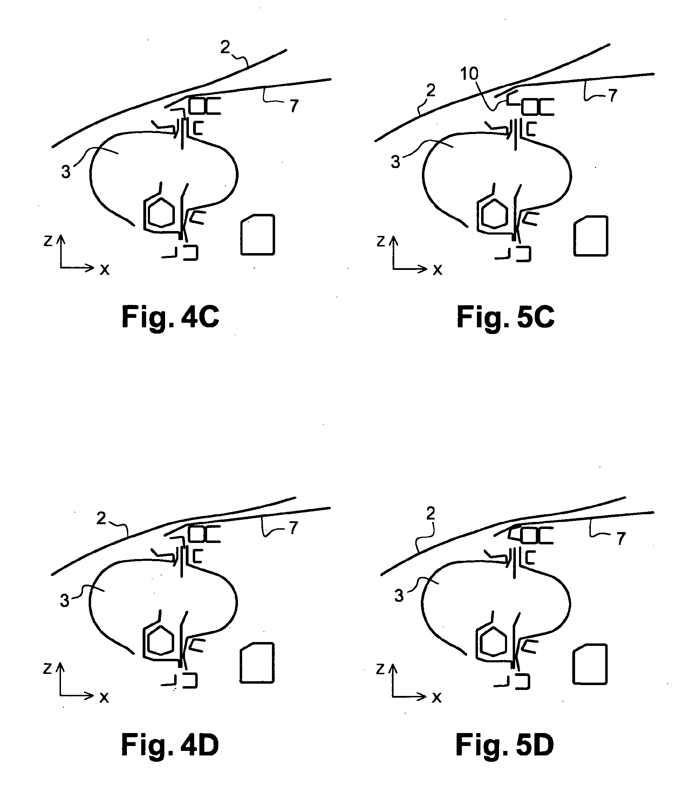

Sur les figures 4C et 5C, on a représenté la phase de déformation du masque. A ce stade du choc, la glace de protection a continué à se déformer, entraînant une déformation du masque. Dans le cas de la figure 4C, le masque n'a pas encore impacté la platine. Dans le cas de la figure 5C, le masque a impacté la réhausse 15 de la platine 10. La réhausse 15 a transmis des efforts de choc aux fixations inférieures de la platine, via la pièce de support de la platine, entraînant une rupture des fûts de fixation. La rupture des fûts inférieurs a induit un début de descente du module d'éclairage et sous l'effet des efforts de choc, la réhausse s'est cassée. Au contraire, dans le cas de la figure 4C, le module d'éclairage ne s'est pas déplacé.

Sur la figure 4D et sur la figure 5D, on a représenté l'état des projecteurs à la fin du choc piéton. Dans les deux figures, le module d'éclairage est complètement descendu. Cependant, dans le cas de la figure 4D, le module d'éclairage est descendu sous l'effet du choc du piéton contre l'axe pivot du module d'éclairage (axe permettant le déplacement latéral du module), alors que dans la figure 5D, la réhausse 15 de la platine a servi d'interface entre le piéton et le module d'éclairage. La réhausse étant moins rigide que l'axe pivot du module d'éclairage, le piéton a subit une pression d'appui moindre. En outre, comme le module d'éclairage était déjà descendu (voir figure 5C), l'effort absorbé par le piéton est également moindre.

Selon l'invention, la rehausse est un élément dont la rigidité est étudiée en fonction de la force nécessaire pour casser les points de fixation inférieurs de la platine. En effet, il faut que la rehausse soit suffisamment rigide pour transmettre les efforts de choc reçus jusqu'aux points de fixation inférieurs avant que la réhausse elle-même ne se casse. Il faut, en outre, qu'elle soit suffisamment fragile pour pouvoir se déformer et se casser après que les efforts de choc aient été transmis aux points de fixation inférieurs de la platine. Dans l'invention, on optimise la structure de la rehausse pour que celle-ci s'écrase simultanément ou après la cassure des points de fixation inférieurs de la platine. La rehausse sert alors de surface tampon qui permet de répartir l'effort de choc sur la partie supérieure du module d'éclairage

Pour cela, la rehausse peut être réalisée dans un matériau caissonné et/ou intérieurement nervuré. Un caisson est une structure creuse, nervurée, qui permet de rigidifier une structure et qui se casse sous l'effet d'un effort prédéfini. Les nervures, par exemple en croisillon ou en nid d'abeille, permettent de définir à l'avance les lignes de cassure de la structure. Dans l'invention, l'utilisation d'un matériau caissonné et/ou nervuré permet de prédéterminer le dégré de résistance de la réhausse par rapport à la platine, c'est-à-dire de choisir l'effort que peut supporter la réhausse avant de se déformer ou de se rompre. On peut ainsi calibrer la réhausse en fonction des efforts à transmettre.

La rehausse peut être réalisée en plastique renforcé, par exemple en thermodur, ou bien en métal, par exemple en acier. Elle peut aussi être réalisée dans une mousse polyéthylène, collée au-dessus de la platine.

Selon un premier mode de réalisation de l'invention, la rehausse consiste en une pièce placée au-dessus de la platine. Elle peut être une pièce indépendante fixée au-dessus de la platine, par exemple par collage. Dans ce cas, la rehausse se présente sous la forme d'un ajout de matière, fabriqué indépendamment de la platine et fixé sur la platine avant son installation dans le boîtier du projecteur. La rehausse peut alors être réalisée dans les différents types de matériaux évoqués précédemment.

La réhausse peut également être intégrée à la platine elle-même, c'est-à-dire qu'elle est réalisée lors de la fabrication de la platine. La rehausse est alors réalisée dans un matériau identique à celui de la platine, avec une structure caissonnée et/ou nervurée.

Dans un second mode de réalisation représenté sur la figure 6, la rehausse comporte des bras de transfert 17 aptes à transférer les efforts de choc directement de la réhausse vers les points de fixation inférieurs.

Dans un troisième mode de réalisation représenté sur la figure 7, les bras de transfert 17 sont reliés par l'intermédiaire d'un bras transversal 18. Ce bras transversal 18 peut remplacer le chapeau 19 de la réhausse ou venir en complément dudit chapeau. Le bras transversal 18 permet d'équilibrer l'effort transmis entre le bras de transfert 17 gauche et le bras de transfert 17 droit. Dans ce mode de réalisation, les bras de transfert 17 et le bras transversal peuvent constituer un ensemble séparé de la platine créant un appui différent sur les fûts de fixation inférieurs.

Dans ces deux derniers modes de réalisation, les points d'attache des bras de transfert 17 au niveau du chapeau 18 de la rehausse ou du bras transversal sont choisis de façon à appuyer plus ou moins rapidement sur un fût de fixation inférieur ou sur un autre. Ainsi, lors du choc, lorsque le masque appuie sur le chapeau 18 de la rehausse, l'effort peut être transmis plus rapidement à un point de fixation qu'à un autre, permettant de favoriser le basculement du module d'éclairage d'un coté ou de l'autre du boîtier. Ce choix du basculement permet de choisir le positionnement du module d'éclairage après basculement afin d'éviter que le piéton ne heurte un point dur du module (par exemple pour éviter la lentille du module).

Les bras de transfert des deux modes de réalisation précédents peuvent être en acier ou en tout autre matériau suffisamment rigide pour transférer des efforts sans se déformer ou se rompre. Dans ce cas, la réhausse peut être réalisée en deux matériaux différents, un matériau pour la pièce supérieure 19 placée sur la platine, appelée chapeau, et un matériau pour les bras de transfert. Les bras de transferts peuvent être glissés sur les fûts de fixation ou bien comporter des parties saillantes posées sur les fûts inférieurs.

Dans les modes de réalisation des figures 6 et 7, la rehausse présente un surcoût du fait des bras de transfert et/ou du bras transversal. Cependant, une telle réhausse présente l'avantage de permettre un passage d'efforts direct sur les points de fixation inférieurs, sans passer par l'intermédiaire de la platine. La rehausse comporte alors un chapeau qui peut être posé au-dessus de la platine et qui vient se fixer sur les fûts inférieurs, ce qui permet de passer directement les efforts du chapeau de la rehausse aux fixations inférieures.

Dans un autre mode de réalisation de l'invention, non représenté sur les figures, la rehausse peut être une rehausse à bascule. Dans ce cas, la rehausse peut avoir une forme sensiblement courbe, montée sur la platine par l'intermédiaire d'un axe pivot. Ainsi, lorsque le masque vient en appui sur la rehausse, celle-ci bascule autour de l'axe pivot entraînant un déplacement de la platine par rapport au fût de fixation, ce qui a pour effet de faire basculer le module d'éclairage.

Des résultats d'un choc piéton sur un projecteur équipé d'une platine avec réhausse sont représenté par la courbe C2, sur la figure 2. Cette courbe C2 correspond à l'effort d'impact sur un projecteur de l'invention, en fonction de l'enfoncement dû à cet impact. On voit, sur cette courbe C2, qu'en début de déformation, c'est-à-dire lorsque l'enfoncement est encore relativement faible, autour de 20mm, il se produit une montée d'effort qui est absente sur la courbe C1 de choc avec un projecteur classique, décrite précédemment. Cette montée d'effort au niveau d'un enfoncement de l'ordre de 20mm ou de 30mm permet de casser les fûts de fixation de la platine sur le boîtier. Lorsque ces fixations cassent, le module commence à descendre. Au moment où le module est impacté, c'est-à-dire au moment où le piéton heurte le module d'éclairage, sa vitesse relative est beaucoup plus faible. On a ainsi un niveau d'effort d'impact beaucoup plus faible.

Au niveau des 20mm d'enfoncement, c'est-à-dire à la première montée d'effort, la glace est déjà déformée. Elle appuie sur le masque et le masque appuie sur la rehausse. Cet appui se traduit par un surplus d'effort, c'est-à-dire une valeur d'effort d'impact plus importante. On a donc une montée d'effort supplémentaire. Toutefois, l'énergie absorbée, c'est-à-dire l'énergie correspondant à cette montée d'effort, permet de réduire la vitesse de la platine sur le module d'éclairage. L'effort d'impact sur le module d'éclairage est donc réduit. Ainsi, sur la courbe C2 on voit que, à l'instant du choc du piéton sur le module d'éclairage, c'est-à-dire aux alentours d'un enfoncement de 45mm, l'effort d'impact est nettement inférieur par rapport à celui de la courbe C1. En effet, l'énergie d'un choc piéton est une énergie constante pour toute la durée du choc. Avec le dispositif de l'invention, cette énergie de choc est répartie de manière plus uniforme, ce qui permet de réduire la valeur du pic le plus intense. On voit, d'après la courbe C2 que, dans le cas de l'invention, au moment le plus fort du choc, l'effort d'impact est inférieur à 5000 Newton, ce qui est nettement inférieur à l'effort maximal obtenu sur la courbe C1 avec un projecteur classique. Le projecteur de l'invention permet donc d'obtenir une courbe avec un effort d'impact maximum réduit de 30 à 40 % lorsque la réhausse est optimisée selon les différents modes de réalisation décrits précédemment. On réduit ainsi d'autant le niveau de décélération maximale de la tête et permet une réduction significative du niveau de la gravité des lésions corporelles du piéton, ce qui permet de respecter la réglementation du choc piéton.

Comme expliqué précédemment, le projecteur avec platine à réhausse de l'invention permet d'amorcer la descente du module d'éclairage avant que la tête du piéton n'impacte ledit module d'éclairage, ce qui permet non seulement de diminuer la force de l'impact mais également de déplacer le module d'éclairage pour éviter un impact contre les points durs du module d'éclairage. Ce projecteur a l'avantage aussi de ne pas entraîner de dégradation de la tenue mécanique de l'ensemble platine et module d'éclairage. En conclusion, l'invention a pour fonction de dissiper l'énergie d'un choc piéton sur un projecteur d'automobile de manière régulière dans le temps, d'éviter ou de limiter au mieux tout « pic d'énergie » très préjudiciable à l'intégrité corporelle du piéton, d'étaler dans le temps la dissipation d'énergie plus que d'essayer de la diminuer.

## Revendications

1. Projecteur pour véhicule automobile comportant :
- un boîtier (1) fixé sur le véhicule et fermé par une glace de protection (2),
- un module d'éclairage (3) monté dans le boîtier, apte à émettre un faisceau lumineux, et
- une platine (10) apte à supporter le module d'éclairage, fixée au boîtier par des points de fixation (12, 13) situés dans une zone inférieure de ladite platine,
comportant une réhausse (15) placée au moins partiellement sur une face supérieure de la platine (10) et apte à transférer par le biais de bras de transfert (17) au moins une partie d'un effort consécutif à un choc d'un piéton contre la glace de protection vers des points de fixation inférieurs (12, 13) de la platine, afin de déplacer le module d'éclairage (3), **caractérisé en ce que** la réhausse entière est installée dans un espace entre la platine et la glace de protection et/ou entre la platine et un masque (7) recouvrant au moins partiellement une surface intérieure du boîtier et/ou de la glace de protection.

2. Projecteur selon l'une des revendications précédentes, **caractérisé en ce que** la réhausse consiste en un ajout de matière intégré à la platine.

3. Projecteur selon la revendication 1, **caractérisé en ce que** la réhausse est une pièce fixée sur ou associée à la face supérieure de la platine.

4. Projecteur selon l'une des revendications 1 à 3, **caractérisé en ce que** la réhausse est réalisée dans un matériau caissonné et/ou nervuré apte à se déformer ou se rompre.

5. Projecteur selon l'une des revendications 1 à 4, **caractérisé en ce que** la réhausse comporte des bras de transfert (17) reliant la face supérieure de la platine au voisinage des points de fixation inférieurs.

6. Projecteur selon la revendication 5, **caractérisé en ce que** la réhausse comporte un bras transversal (18) reliant les bras de transfert (17).

7. Projecteur selon l'une des revendications 1 à 6, **caractérisé en ce que** la réhausse est au moins partiellement métallique.

8. Procédé de protection d'un piéton, **caractérisé en ce que**, lors d'un choc d'un piéton contre une glace de protection d'un projecteur de véhicule automobile, une réhausse, placée sur ou associée à une face supérieure d'une platine de support d'un module d'éclairage du projecteur, transfère une partie de l'effort de choc de la glace de protection vers des points de fixation inférieurs de la platine, entraînant une rupture desdits points de fixation puis un déplacement du module d'éclairage et **en ce que** la réhausse est installée dans un espace entre la platine et la glace de protection et/ou entre la platine et un masque (7) recouvrant au moins partiellement une surface intérieure du boitier et/ou de la glace de protection.

9. Véhicule automobile **caractérisé en ce qu'**il comporte au moins un projecteur lumineux selon l'une des revendications 1 à 7.

## Claims

1. Headlight for a motor vehicle, comprising:
- a housing (1) which is secured to the vehicle, and is closed by protective glass (2);
- a lighting module (3) which is fitted in the housing, and can emit a light beam; and
- a plate (10) which can support the lighting module, which is secured to the housing by securing points (12, 13) which are situated in a lower area of the said plate,
comprising a raised part (15) which is placed at least partially on an upper surface of the plate (10) and can transfer, by means of transfer arms (17), at least part of a force derived from collision of a pedestrian against the protective glass, towards lower securing points (12, 13) of the plate, in order to displace the lighting module (3), **characterised in that** the entire raised part is installed in a space between the plate and the protective glass, and/or between the plate and a shield (7) which covers at least partially an inner surface of the housing and/or of the protective glass.

2. Headlight according to one of the preceding claims, **characterised in that** the raised part consists of added material which is integrated in the plate.

3. Headlight according to claim 1, **characterised in that** the raised part is a part which is secured to, or associated with, the upper surface of the plate.

4. Headlight according to one of claims 1 to 3, **characterised in that** the raised part is made of a material which is boxed or ribbed, and which can be deformed or broken.

5. Headlight according to one of claims 1 to 4, **characterised in that** the raised part comprises transfer arms (17) which connect the upper surface of the plate in the vicinity of the lower securing points.

6. Headlight according to claim 5, **characterised in that** the raised part comprises a transverse arm (18) which connects the transfer arms (17).

7. Headlight according to one of claims 1 to 6, **characterised in that** the raised part is a least partly made of metal.

8. Method for protection of a pedestrian, **characterised in that**, during a collision of a pedestrian against protective glass of a motor vehicle headlight, a raised part, which is placed on, or is associated with, an upper surface of a support plate of a lighting module of the headlight, transfers part of the collision force of the protective glass towards lower securing points of the plate, thus giving rise to breakage of the said securing points, then to displacement of the lighting module, and **in that** the raised part is installed in a space between the plate and the protective glass, and/or between the plate and a shield (7) which covers at least partially an inner surface of the housing and/or of the protective glass.

9. Motor vehicle, **characterised in that** it comprises at least one headlight according to one of claims 1 to 7.

## Patentansprüche

1. Kraftfahrzeugscheinwerfer mit:
- einem Gehäuse (1), das am Fahrzeug befestigt und durch eine Schutzscheibe (2) geschlossen ist,
- einem in dem Gehäuse montierten Beleuchtungsmodul (3), das ein Lichtbündel zu emittieren vermag, und
- einer zum Tragen des Beleuchtungsmoduls geeigneten Platte (10), die am Gehäuse durch Befestigungspunkte (12, 13) befestigt ist, die in einem unteren Bereich der Platte liegen,
mit einem Aufsatz (15), der wenigstens teilweise auf einer Oberseite der Platte (10) angeordnet ist und durch Übertragungsarme (17) wenigstens einen Teil einer auf einen Aufprall eines Fußgängers auf die Schutzscheibe folgenden Kraft zu unteren Befestigungspunkten (12, 13) der Platte überträgt, um das Beleuchtungsmodul (3) zu verlagern,
**dadurch gekennzeichnet, dass** der gesamte Aufsatz in einem Zwischenraum zwischen der Platte und der Schutzscheibe und/oder zwischen der Platte und einer eine Innenfläche des Gehäuses und/oder der Schutzscheibe wenigstens zum Teil verdeckenden Blende (7) angeordnet ist.

2. Scheinwerfer nach dem vorhergehenden Anspruch,
**dadurch gekennzeichnet, dass** der Aufsatz aus einem in die Platte integrierten Materialzusatz besteht.

3. Scheinwerfer nach Anspruch 1,
**dadurch gekennzeichnet, dass** der Aufsatz ein Teil ist, das auf der Oberseite der Platte befestigt oder der Oberseite der Platte zugeordnet ist.

4. Scheinwerfer nach einem der Ansprüche 1 bis 3,
**dadurch gekennzeichnet, dass** der Aufsatz aus einem kastenförmigen und/oder gerippten Material ausgeführt ist, das sich zu verformen oder zu brechen vermag.

5. Scheinwerfer nach einem der Ansprüche 1 bis 4,
**dadurch gekennzeichnet, dass** der Aufsatz Übertragungsarme (17) umfasst, die die Oberseite der Platte mit der Nachbarschaft der unteren Befestigungspunkte verbinden.

6. Scheinwerfer nach Anspruch 5,
**dadurch gekennzeichnet, dass** der Aufsatz einen die Übertragungsarme (17) verbindenden Querarm (18) umfasst.

7. Scheinwerfer nach einem der Ansprüche 1 bis 6,
**dadurch gekennzeichnet, dass** der Aufsatz wenigstens zum Teil aus Metall ist.

8. Verfahren zum Schutz eine Fußgängers,
**dadurch gekennzeichnet, dass** bei einem Aufprall eines Fußgängers auf eine Schutzscheibe eines Kraftfahrzeugscheinwerfers ein Aufsatz, der auf einer Oberseite einer Tragplatte eines Beleuchtungsmoduls des Scheinwerfers angeordnet oder dieser zugeordnet ist, einen Teil der Aufprallkraft von der Schutzscheibe zu unteren Befestigungspunkten der Platte überträgt, wodurch ein Brechen der Befestigungspunkte und anschließend eine Verlagerung des Beleuchtungsmoduls bewirkt wird, und dass der Aufsatz in einem Zwischenraum zwischen der Platte und der Schutzscheibe und/oder zwischen der Platte und einer eine Innenfläche des Gehäuses und/oder der Schutzscheibe wenigstens zum Teil verdeckenden Blende (7) angeordnet ist.

9. Kraftfahrzeug,
**dadurch gekennzeichnet, dass** es wenigstens einen Scheinwerfer nach einem der Ansprüche 1 bis 7 umfasst.
